# EUROPÄISCHE PATENTANMELDUNG

(11) **EP 0 745 848 A1**
(43) Veröffentlichungstag der Anmeldung: **04.12.1996**
(21) Anmeldenummer: 96105700.7
(22) Anmeldetag: 11.04.1996
(51) Int. Cl.: G01N 31/12

(54) **Verfahren zum Aufschluss von organischen und anorganischen Proben sowie Brenner dafür**

(30) Priorität: 23.05.1995 DE 19518376
(71) Anmelder: Heraeus Quarzglas GmbH, D-63450 Hanau (DE)
(72) Erfinder: Roth, Jürgen, 64377 Maintal (DE); Erber, Dietmar, 48149 Münster (DE)

(57) **Zusammenfassung**

Die Erfindung betrifft ein Verfahren zum Aufschluß von organischen und anorganischen Proben zur Analyse von Probenbestandteilen unter Verwendung eines aus Quarzglas gebildeten, mit Brenngas (Wasserstoff) und Sauerstoff betriebenen Brenners, der mehrere mit Ringspalt zueinander konzentrisch angeordnete Rohre aufweist, in dessen Zentralrohr die Probenbestandteile eingeleitet werden, wobei die Probenbestandteile vor der Einleitung in das Zentralrohr unter Erhitzung und Zugabe von Inertgas oder Sauerstoff in den gasförmigen Zustand überführt werden. Um sowohl feste als auch flüssige Proben vollständig aufzuschließen, ohne daß der Brenner durch Kondensat zugesetzt wird, werden die in den gasförmigen Zustand überführten Probenbestandteile vor Einleitung in das Zentralrohr unter Zugabe von Sauerstoff vorverbrannt, wobei die Richtung des zugeführten Sauerstoffstromes die Strömungsrichtung der Probenbestandteile zum Zentralrohr schneidet. Die Erfindung betrifft weiterhin einen Brenner zur Durchführung des Verfahrens.

## Beschreibung

Die Erfindung betrifft ein Verfahren zum Aufschluß von organischen und anorganischen Proben zur Analyse von Probenbestandteilen unter Verwendung eines aus Quarzglas gebildeten, mit Brenngas, insbesondere Wasserstoff, Sauerstoff und Inertgas betriebenen Brenners, der mehrere mit Ringspalt zueinander konzentrisch angeordnete Rohre aufweist, in dessen inneres, das Zentralrohr, die Probenbestandteile eingeleitet werden, wobei die Probenbestandteile vor der Einleitung in das Zentralrohr unter Erhitzung und Zugabe von Inertgas oder Sauerstoff in den gas- oder aeorosolförmigen Zustand überführt und nach Verlassen des Zentralrohres in einer Wasserstoff-Sauerstoff-Atmosphäre verbrannt werden. Die Erfindung betrifft des weiteren einen Brenner zur Durchführung des Verfahrens.

Aus den Firmenprospekten "Aufschlußapparatur V5/PHL-B 40" und "Vorverbrennungseinheit VE/PHL-B 41/D" ist es bekannt, Proben nach dem eingangs charakterisierten Verfahren aufzuschließen. Nach dem hier beschriebenen Verfahren (Wickbold-Methode) werden Probenaufschlüsse zur Bestimmung des Schwefel-, Halogen- und Borgehaltes sowie zur Bestimmung von leicht verflüchtigbaren Elementen wie Arsen, Antimon, Seien, Blei und Quecksilber in organischen und anorganischen Substanzen beschrieben. Der Probenaufschluß erfolgt mittels einer Wasserstoff-Sauerstoff-Flamme in einem geschlossenen, wassergekühlten Brennraum unter Verwendung eines Saugbrenners für flüssige oder eines Feststoffbrenners für feste Substanzen oder feststoffbelastete Flüssigkeiten. Die Substanzen werden in einer laminaren Flamme oxidativ zersetzt, wobei flüssige Substanzen nach dem Injektor-Zerstäuber-Prinzip unmittelbar in die Wasserstoff-Sauerstoff-Flamme zerstäubt werden. Dort werden sie je nach Viskosität mehr oder weniger gut oxidativ zersetzt (verbrannt). Feste Substanzen oder feststoffbelastete Flüssigkeiten werden in einem der Wasserstoff-Sauerstoff-Flamme vorgeschalteten Raum, einer rohrförmigen Vorkammer, zunächst unter Zugabe von Inertgas unter Wärmeeinwirkung verkokt. Der Inertgas-Strom, der die flüchtigen Verkokungsprodukte laminar, teils tropfenförmig, durch eine Kapillare in die Flamme des Brenners befördert, wird nach Abschluß der Verkokung durch Sauerstoff ersetzt, so daß die Rückstände in reinem Sauerstoff oxidiert werden. Dabei kommen die das Quarzglas des Brenners angreifenden Bestandteile der Proben mit dem Quarzglas in direkten Kontakt, so daß eine Schädigung des Brenners durch Rekristallisation des Quarzglases oder Schmelzfluß eintritt, die oft bereits nach wenigen Aufschlüssen zur Zerstörung des Brenners führt. Die Verkokungsprodukte gelangen vom Vergasungsraum laminar durch eine Kapillare an die Wasserstoff-Sauerstoff-Flamme. Diese Kapillare wird von Rohren konzentrisch umgeben, die Wasserstoff und Sauerstoff zum Ort der Verbrennung leiten. Dabei wird die zentrale, die Verkokungsprodukte führende Kapillare von dem Sauerstoff gekühlt, so daß die Verkokungsprodukte teilweise innerhalb der Kapillare kondensieren und entweder als Tropfen in die Wasserstoff-Sauerstoff-Flamme gelangen und dort unvollständig aufgeschlossen werden oder sich direkt in der Kapillare niederschlagen und diese mit der Zeit verstopfen, so daR der Aufschluß unterbrochen wird. Die Brenner sind in Abhängigkeit von der Probenbeschaffenheit einzusetzen; bei aufeinanderfolgendem Aufschluß von flüssigen und festen Proben ist ein Wechsel der Brenner und damit ein Umbau der gesamten Apparatur erforderlich.

Der vorliegenden Erfindung liegt, ausgehend von dem beschriebenen Stand der Technik, die Aufgabe zugrunde, ein Verfahren sowie einen Brenner anzugeben mit dem sowohl feste als auch flüssige Proben vollständig aufgeschlossen werden können, ohne daß die Gefahr des Zusetzens des Brenners durch kondensierte Probenbestandteile besteht.

Erfindungsgemäß wird die Aufgabe für das eingangs charakterisierte Verfahren dadurchg gelöst, daß die in den gas- oder aerosolförmigen Zustand überführten Probenbestandteile vor Einleitung in das Zentralrohr unter Zugabe von Sauerstoff vorverbrannt werden, wobei die Richtung des zugeführten Sauerstoffstromes die Strömungsrichtung der Probenbestandteile zum Zentralrohr schneidet. Mit diesem Verfahren werden die Proben vollständig aufgeschlossen, so daß eine hohe Analysengenauigkeit gewährleistet werden kann. Dabei können feste oder flüssige Proben aufgeschlossen werden. Durch die seitliche Einleitung des Sauerstoffstromes vor der Mündung des Zentralrohres kommt es zu einer turbulenten Vorverbrennung der Probe und zu einem turbulenten Eintrag in die Wasserstoff-Sauerstoff-Flamme. Die Turbulenzen bewirken eine gute Durchmischung und damit eine genügend große Verweilzeit der Probenbestandteile in der heißen Zone der Flamme, so daß die Vollständigkeit des Aufschlusses gewährleistet ist.

Vorteilhafterweise erfolgt zunächst eine Überführung der flüchtigen Probenbestandteile in den gas- oder aerosolförmigen Zustand unter Zugabe von Inertgas, danach wird das Inertgas durch Sauerstoff ersetzt. Dadurch werden nach der Freisetzung der leicht flüchtigen Probenbestandteile die verbleibenden Rückstände in reinem Sauerstoff oxidiert, so daß eine vollständige thermische Zersetzung auch der vorher nicht verbrannten Probenbestandteile gewährleistet ist. Durch den Sauerstoffeintrag wird also beispielsweise auch eine Reinigung des Brenners von an den Wandungen eventuell anhaftenden Probenresten erzielt.

Zweckmäßigerweise wird die Probe bei der Überführung in den gas- oder aerosolförmigen Zustand auf etwa 800 bis 900°C erhitzt. Abhängig von der zu analysierenden Substanz können durch niedrigere oder höhere Temperaturen in Frage kommen. Insbesondere wird die Probe in der Inertgasatmosphäre auf etwa 800°C und in der Sauerstoffatmosphäre auf etwa 1100°C erhitzt. Zweckmäßigerweise wird als Inertgas Stickstoff oder Argon verwendet.

Die Aufgabe wird für einen Brenner für den Aufschluß von organischen und anorganischen Proben mit einer rohrförmigen Vorkammer, an deren einem Ende mehrere mit Ringspalt zueinander konzentrisch angeordnete Rohre angeordnet sind, wobei die Vorkammer in das innere Rohr als Zentralrohr mündet und das das Zentralrohr mit Ringspalt umgebende Rohr einen Anschlußstutzen aufweist und wobei die Vorkammer einen weiteren Anschlußstutzen im Bereich der Mündung zum Zentralrohr und einen dritten Anschlußstutzen an ihrem anderen Ende aufweist, der als Schliffstück konzentrisch am Ende der Vorkammer angeordnet ist, wobei in dem dritten Anschlußstutzen ein Stopfen angeordnet ist, der einen in die Vorkammer mündenden Gasanschluß aufweist, dadurch gelöst, daß der Gasanschluß an seinem in die Vorkammer mündenden Ende eine Ringdüse bildet, die eine Öffnung eines durch den Stopfen geführten Zuleitungsrohres umgibt. Mindestens die Vorkammer des Brenners ist von einer Heizung, vorzugsweise von einer elektrischen Heizung umgeben. Der Brenner ist vorteilhafterweise aus Quarzglas gebildet. In einem derartigen Brenner ist sowohl der Aufschluß von festen oder Feststoff belasteten flüssigen Proben (beispielsweise auch Pasten) als auch von flüssigen Proben gleichermaßen möglich. Dabei ist kein zusätzlicher und aufwendiger Umbau der Apparatur notwendig. Feste oder feststoffbelastete Proben werden direkt in die Vorkammer eingebracht, während flüssige Proben durch das Zuleitungsrohr des Stopfens geführt und an der Ringdüse zerstäubt werden. Das der Vorkammer abgewandte Ende der konzentrischen Rohre bildet die Brennerdüse und dient zugleich dem Anschluß an weitere Bestandteile der Aufschlußapparatur. Dieser Anschluß ist in der Regel standardisiert, so daß der äußere Durchmesser dieses System aus konzentrischen Rohren festgelegt ist. Dadurch, daß das Zentralrohr von lediglich einem weiteren Rohr umgeben ist, kann der Querschnitt des Zentralrohres entsprechend größer ausgebildet werden. Verglichen mit der aus dem Stand der Technik bekannten Anordnung ist ein etwa 10fach vergrößerter Querschnitt möglich. Turbulente Gasströmungen werden aus der Vorkammer auch turbulent durch das Zentralrohr geleitet, die Gase verweilen am Ausgang des Zentralrohres in der Wasserstoff-Sauerstoff-Flamme ausreichend lange, um einen vollständigen Aufschluß zu gewährleisten. Die längere Verweildauer wird auch bewirkt durch die aufgrund eines großen Zentralrohrdurchmessers geringe Strömungsgeschwindigkeit. Eventuelle Ablagerungen an der Innenwandung des Zentralrohres haben nur unwesentlichen Einfluß auf den Öffnungsquerschnitt und damit auf die Strömungsgeschwindigkeit. Der Anschlußstutzen der Vorkammer im Bereich der Mündung des Zentralrohres dient der Sauerstoffversorgung. Es bildet sich unmittelbar vor dem Eingang des Zentralrohres eine Flamme, in der die Probe vorverbrannt wird. Anders als in den bekannten Brennern wird das Zentralrohr nicht durch einen es umgebenden Sauerstoffstrom gekühlt, so daß sich an der Rohrwandung kein Kondensat bildet.

Zweckmäßig ist es, daß in der Vorkammer ein rohrartiger Tiegel angeordnet ist, dessen auf das Zentralrohr weisendes Ende geschlossen ist. Vorteilhaft ist es weiterhin, daß in dem Tiegel ein Probenhalter angeordnet ist. In dem Probenhalter (auch Schiffchen genannt) können feste Proben angeordnet werden. Bei Erhitzung der Vorkammer unter einem durch den Gasanschluß der Vorkammer zugeführten Gasstrom verweilen flüchtige Probenbestandteile sehr lange in dem Tiegel, so daß in der Regel keine festen Bestandteile oder größere Tropfen im Gasstrom mitgerissen und dem Zentralrohr zugeführt werden. Der aus dem Gasanschluß geführte Gasstrom verweilt turbulent lange genug in dem Tiegel, um die Verflüchtigung der Probenbestandteile zu gewährleisten. Die Probenbestandteile haben dadurch kaum Kontakt mit dem Material des Brenners, da der Tiegel einen derartigen Kontakt weitgehend verhindert. Dadurch werden substanzbedingte, das Quarzglas schädigende Reaktionen, beispielsweise Rekristallisationen, des Brenners vermieden; lediglich der Tiegel ist diesen Angriffen ausgesetzt. Der Tiegel ist jedoch als Wegwerfartikel leicht und kostengünstig zu ersetzen.

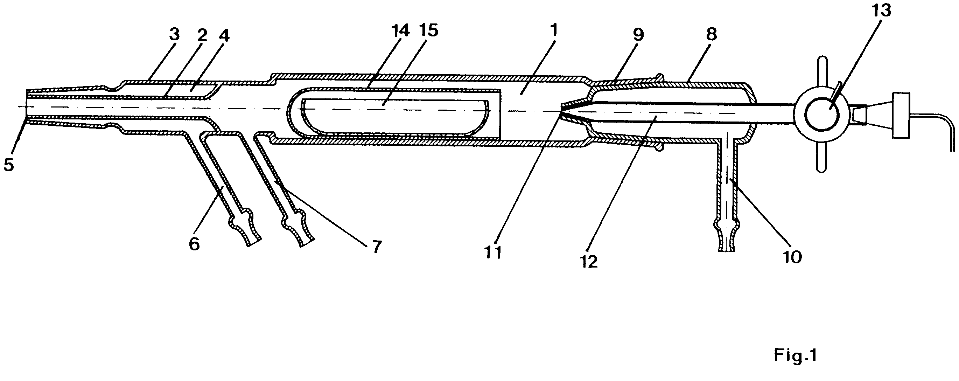

Nachfolgend wird ein Ausführungsbeispiel der Erfindung anhand einer Zeichnung näher erläutert. In der Zeichnung zeigt
- Figur 1: einen kompletten Brenner mit einem Tiegel für den Aufschluß fester Proben und
- Figur 2: einen Brenner, wie er insbesondere für den Aufschluß flüssiger Proben verwendet wird.

Der Brenner weist eine röhrenartige Vorkammer 1 auf, an deren einem Ende koaxial zwei Rohre angeordnet sind, von denen das innere das Zentralrohr 2 bildet und das äußere Rohr 3 in Richtung des der Vorkammer 1 abgewandten Endes im wesentlichen konisch verläuft, wobei der Ringspalt 4 zur Mündung 5 hin kleiner wird. Das Zentralrohr 2 und das äußere Rohr 3 sind mit der Wandung der Vorkammer 1 verbunden, so daß der Ringraum 4 gegen die Vorkammer 1 abgegrenzt ist. Das äußere Rohr 3 ist an seinem der Mündung 5 abgewandten Ende mit einem Anschlußstutzen 6 versehen, der der Zufuhr von Wasserstoff in den Ringraum 4 dient. Die Vorkammer 1 ist unmittelbar vor der Mündung des Zentralrohres 2 mit einem Anschlußstutzen 7 versehen, durch den Sauerstoff in die Vorkammer geleitet werden kann.

Am anderen Ende der Vorkammer 1 ist ein Stopfen 8 in einem konzentrischen Schliffstück 9 angeordnet. Dieses Schliffstück 9 bildet den dritten Anschlußstutzen der Vorkammer 1. Der Stopfen 8 weist einen in die Vorkammer 1 mündenden Gasanschluß 10 auf. Der Gasanschluß 10 bildet an seinem in die Vorkammer 1 mündenden Ende eine Ringdüse 11, die eine Öffnung eines durch den Stopfen 8 geführten Zuleitungsrohres 12 umgibt. Das Zuleitungsrohr 12 dient der Zuleitung flüssiger Substanz in die Vorkammer 1 und weist außerhalb des Stopfens 8 ein Absperrventil 13 auf. Im Falle des Aufschlusses von festen Substanzen ist das Absperrventil 13 geschlossen und in der Vorkammer 1 ist ein Tiegel 14 angeordnet, in dessen Innenraum sich ein Probenhalter 15 befindet. Der Tiegel 14 hat die Form eines Rohres, das an seinem dem Zentralrohr 2 zugewandten Ende geschlossen ist. Beim Aufschluß fester Substanz wird der Vorkammer durch den Gasanschluß 10 Stickstoff zugeführt. Gleichzeitig wird die Vorkammer 1 auf etwa 800°C erhitzt. In der Stickstoffatmosphäre verflüchtigen sich leicht verflüchtigbare Elemente, wie Arsen, Antimon, Blei, Selen und Quecksilber in organischen und anorganischen Substanzen. An der Mündung 5 liegt über die an diese Mündung 5 anzuschließende Apparatur ein Unterdruck an, so daß die flüchtigen Substanzen zur Mündung 5 hin strömen. Aufgrund des Stickstoffstromes direkt in den Tiegel 14 hinein ist die Verweilzeit der flüchtigen Substanzen im Tiegel 14 relativ hoch. Über den Anschlußstutzen 7 wird der Vorkammer 1 Sauerstoff zugeführt; der Sauerstoffstrom vermischt sich mit dem Strom aus Stickstoff und den flüchtigen Probenbestandteilen. Das dabei entstehende Gasgemisch entzündet sich, so daß eine Vorverbrennung an dem dem Zentralrohr 2 zugewandten Ende der Vorkammer 1 stattfindet. Der aus dieser Vorverbrennung hervorgehende Gasstrom tritt mit relativ geringer Geschwindigkeit durch das Zentralrohr 2 hindurch und wird an der Mündung 5 einer Flamme aus durch den Anschlußstutzen 6 zugeführtem Wasserstoff und Sauerstoff (aus Anschlußstutzen 7) zugeführt, wo die Probenbestandteile bei Temperaturen von größer 2000°C restlos verbrannt werden. Aufgrund der geringen Strömungsgeschwindigkeit und der Turbulenz der Strömung ist die Verweilzeit der Probenbestandteile in der Flamme ausreichend hoch.

Nach Abschluß der Verflüchtigung der flüchtigen Substanzen aus dem Probenhalter 15 wird der Stickstoffstrom durch den Gasanschluß 10 gestoppt und der Vorkammer durch Gasanschluß 10 reiner Sauerstoff zugeführt. Die Temperatur der Vorkammer wird auf etwa 1100°C erhöht. Der durch Gasanschluß 10 zugeführte Sauerstoff gewährleistet eine Verbrennung der restlichen Bestandteile der in dem Probenhalter 15 befindlichen Probe ebenso wie eine Verbrennung von eventuell an den Wänden der Vorkammer 1 oder des Zentralrohres 4 anhaftenden Probenbestandteilen. Dadurch wird zum einen der Brenner gereinigt, zum anderen wird der Aufschluß der Probe vervollständigt, so daß exakte und reproduzierbare Analyseergebnisse erhalten werden können. Der Einsatz des Tiegels 14 hat zusätzlich den Vorteil, daß Alkali- oder Erdalkali-Verbindungen nicht mit dem Quarzglas des Brenners in Berührung kommen, so daß dieser nicht durch Rekristallisation zerstört werden kann. Der eventuell durch Rekristallisation im Laufe der Zeit zerstörte Tiegel 14 kann als Massenprodukt leicht und kostengünstig durch das Schliffstück 9 entnommen und ersetzt werden.

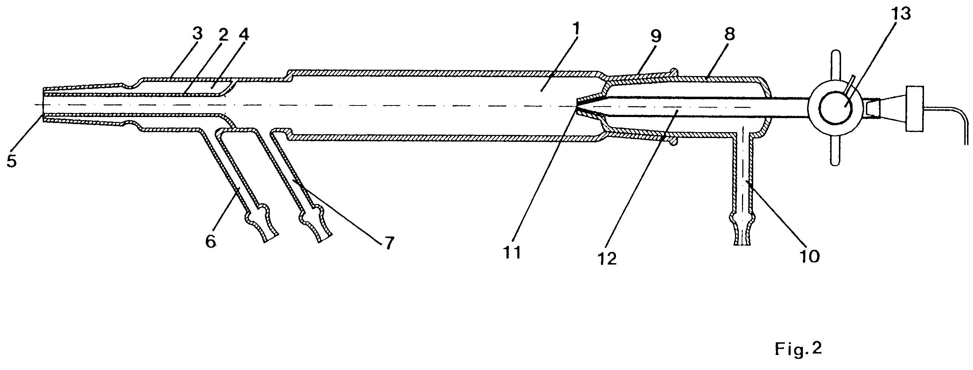

In Abbildung 2 ist der Brenner ohne Tiegel 14 und Probenhalter 15 dargestellt. In dieser Gestalt wird er überwiegend zum Aufschluß flüssiger Proben verwendet. Die Probenflüssigkeit wird dabei durch das geöffnete Ventil 13 und das Zuleitungsrohr 12 geleitet und an der Ringdüse 11 in die Vorkammer 1 hinein zerstäubt. Das Zerstäuben erfolgt ebenfalls unter Zugabe von Stickstoff durch den Gasanschluß 10. Der weitere Probenaufschluß erfolgt analog dem oben beschriebenen Aufschluß fester Proben unter Erwärmung der Vorkammer 1. Auch hier kann nach erfolgtem Aufschluß der flüssigen Probe die Stickstoffzufuhr durch den dritten Gasanschluß 10 gegen die Zufuhr von Sauerstoff getauscht werden, um eventuelle Ablagerungen an den Wänden des Brenners oxidativ zu beseitigen.

## Patentansprüche

1. Verfahren zum Aufschluß von organischen und anorganischen Proben zur Analyse von Probenbestandteilen unter Verwendung eines aus Quarzglas gebildeten, mit Brenngas, insbesondere Wasserstoff, Sauerstoff und Inertgas betriebenen Brenners, der mehrere mit Ringspalt zueinander konzentrisch angeordnete Rohre aufweist, in dessen inneres, das Zentralrohr, die Probenbestandteile eingeleitet werden, wobei die Probenbestandteile vor der Einleitung in das Zentralrohr unter Erhitzung und Zugabe von Inertgas oder Sauerstoff in den gas- oder aeorosolförmigen Zustand überführt und nach Verlassen des Zentralrohres in einer Wasserstoff-Sauerstoff-Atmosphäre verbrannt werden, dadurch gekennzeichnet, daß die in den gas- oder aerosolförmigen Zustand überführten Probenbestandteile vor Einleitung in das Zentralrohr (2) unter Zugabe von Sauerstoff vorverbrannt werden, wobei die Richtung des zugeführten Sauerstoffstromes die Strömungsrichtung der Probenbestandteile zum Zentralrohr schneidet.

2. Verfahren nach Anspruch 1, dadurch gekennzeichnet, daß zuerst eine Überführung der flüchtigen Stoffe in den gas- oder aerosolförmigen Zustand unter Zugabe von Inertgas erfolgt und daß danach das Inertgas durch Sauerstoff ersetzt wird.

3. Verfahren nach Anspruch 1 oder 2, dadurch gekennzeichnet, daß die Probe bei der Überführung in den gas- oder aerosolförmigen Zustand auf etwa 800 bis 900°C erhitzt wird.

4. Verfahren nach Anspruch 3, dadurch gekennzeichnet, daß die Probe in der Inertgasatmosphäre auf etwa 800°C und in der Sauerstoffatmosphäre auf etwa 1100°C erhitzt wird.

5. Verfahren nach einem der Ansprüche 1 bis 4, dadurch gekennzeichnet, daß als Inertgas Stickstoff oder Argon verwendet wird.

6. Brenner für den Aufschluß von organischen und anorganischen Proben mit einer rohrförmigen Vorkammer, an deren einem Ende mehrere mit Ringspalt zueinander konzentrisch angeordnete Rohre angeordnet sind, wobei die Vorkammer in das innere Rohr als Zentralrohr mündet und das das Zentralrohr mit Ringspalt umgebende Rohr einen Anschlußstutzen aufweist und wobei die Vorkammer einen weiteren Anschlußstutzen im Bereich der Mündung zum Zentralrohr und einen dritten Anschlußstutzen an ihrem anderen Ende aufweist, der als Schliffstück konzentrisch am Ende der Vorkammer angeordnet ist, wobei in dem dritten Anschlußstutzen ein Stopfen angeordnet ist, der einen in die Vorkammer mündenden Gasanschluß aufweist, dadurch gekennzeichnet, daß der Gasanschluß (10) an seinem in die Vorkammer (1) mündenden Ende eine Ringdüse (11) bildet, die eine Öffnung eines durch den Stopfen (8) geführten Zuleitungsrohres (12) umgibt.

7. Brenner nach Anspruch 6, dadurch gekennzeichnet, daß er aus Quarzglas gebildet ist.

8. Brenner nach Anspruch 6 oder 7, dadurch gekennzeichnet, daß in der Vorkammer (1) ein rohrartiger Tiegel (14) angeordnet ist, dessen zum Zentralrohr (2) weisendes Endes geschlossen ist.

9. Brenner nach Anspruch 8, dadurch gekennzeichnet, daß in dem Tiegel (14) ein Probenhalter (15) angeordnet ist.
